# EUROPÄISCHE PATENTSCHRIFT

(11) **EP 1 315 388 B1**
(45) Veröffentlichungstag und Bekanntmachung des Hinweises auf die Patenterteilung: **25.02.2015**
(21) Anmeldenummer: 03004652.8
(22) Anmeldetag: 07.09.1996
(51) Int. Cl.: H04W 88/18

(54) **Verfahren zum Übertragen von digitalisierten Daten**
Process for transmitting digitised data
Procédé de transmission de données numérisées

(30) Priorität: 29.11.1995 DE 19544367
(43) Veröffentlichungstag der Anmeldung: 28.05.2003
(62) Teilanmeldung aus: 96934415.9
(73) Patentinhaber: IPCom GmbH & Co. KG, 82049 Pullach (DE)
(72) Erfinder: Mayer, Ralf, 71546 Aspach (DE)
(74) Vertreter: Gigerich, Jan

(56) Entgegenhaltungen:
- WO-A2-97/16819
- BOSCH TELECOM AND DETEMOBIL: "Proposal for a tandem free operation (TFO) of speech codecs in MS to MS calls using inband signalling", ETSI/SMG/SMG2/SEG, 27. November 1995 (1995-11-27), - 29. November 1995 (1995-11-29), Seiten p.1-4,, XP002689003, Tampere (FI)

## Beschreibung

Die Erfindung betrifft ein Verfahren zum Übertragen von Daten, insbesondere GSM-Daten zwischen mindestens zwei Teilnehmern.

### Stand der Technik

Bei bisherigen GSM-Datenverbindungen, insbesondere für digitalisierte Sprachdaten, zwischen mobilen Teilnehmern über ein Kommunikationsnetz, beispielsweise das öffentliche Fernsprechnetz (PSTN - Public Switched Telephone Network), wurden die GSM-Daten in GSM-Format in das Rahmenformat des Kommunikationsnetzes - 64 kbit/s PCM bei PSTN - mittels einer Umcodiereinrichtung/einem Transcoder umgesetzt. Eine solche Transcodierung erfolgt beim Mobilfunksystem DMCS 900 in den Basisstationen bzw. an der A-Schnittstelle beim Übergang auf das PSTN-Kommunikationsnetz. Nach der GSM-Recommendation 0860/0861 erfolgt die digitale Sprachübertragung in sogenannten "TRAU-frames" (transcode and rate adaptor unit); d. h. Übertragungsrahmen im 16 kbit/s-Format bei FR (Full Rate) Übertragung und 8 kbit/s oder auch 16 kbit/s bei HR (Half Rate) Übertragung.

Aus der US 5,091,945 ist es bekannt, anstelle von Sprachdaten nur Signalparameter (Sprachparameter) zu übertragen, aus denen die Nutzdaten wieder rekonstruiert werden können.

Aus der EP-A-A-0 332 345 ist es bekannt, die Übertragung von Sprachabtastwerten in einem ersten Datenstrom und die Übertragung von Synchronisationsmuster durchzurühren.

Aus der nach dem Prioritätsdatum der vorliegenden Anmeldung veröffentlichten internationalen Patentanmeldung WO 96/23297 ist es bekannt, die Übertragung von Sprachabtastwerten in einem ersten Datenstrom und die Übertragung von Kennungsinformationen sowie von Sprachparametern zur Sprachdatenrekonstruktion in einem zweiten Datenstrom durchzuführen. Ein wesentlicher Nachteil des in WO 96/23297 offenbarten Datenübertragungsverfahrens besteht darin, dass die Kennungsinformationen permanent übertragen werden. Die WO 96/23297 entspricht der europäischen Patentanmeldung EP 806 032 und ist nur gemäß Art. 54 (3) EPÜ möglicherweise von Bedeutung.

### Vorteile der Erfindung

Das erfindungsgemäße Verfahren - wie die zwei Transkodiereinrichtungen zu einem TFO-Betrieb signalisiert werden -, mit den Merkmalen des Hauptanspruchs hat demgegenüber den Vorteil, dass es folgende Maßnahmen vorsieht:
- Schalten einer Verbindung zwischen den Teilnehmereinheiten (TI1, TI2);
- Signalisieren durch die erste Transkodiereinrichtung (TCE1), die der rufenden Teilnehmereinheit (TI1) zugeordnet ist, einer zweiten Transkodiereinrichtung (TCE2), die der gerufenen Teilnehmereinheit (TI2) zugeordnet ist, dass es sich bei der ersten Transkodiereinrichtung (TCE1) um eine TFO (Tandemfrei-Betrieb)-fähige Transkodiereinrichtung handelt, wobei das Signalisieren für eine vorgegebene maximale Zeitdauer stattfindet;
- Schalten der der gerufenen Teilnehmereinheit (TI2) zugeordneten Transkodiereinrichtung (TCE2) in einen TFO-Betrieb, sobald die oben genannte Signalisierung von dieser erkannt wurde; und
- Austauschen von Sprachparametern zwischen den Transkodiereinrichtungen (TCE1, TCE2);
wobei ein Datenstrom zwischen den Transkodiereinrichtungen (TCE1, TCE2), die den Teilnehmereinheiten (TI1, T12) zugeordnet sind, sowohl während der Zeitphase der Signalisierung, als auch während der Zeitphase des Austausches von Sprachparametern in einen ersten Datenstrom mit Sprachabtastwerten und in einen zweiten Datenstrom unterteilt wird; und
wobei der zweite Datenstrom während der Zeitphase der Signalisierung Kennungsinformationen und während der Zeitphase des Austausches Sprachparameter zur Sprachdatenrekonstruktion enthält.

Besonders vorteilhaft ist es, dass sich eine Verbesserung der Qualität übertragener Daten, insbesondere von GSM-Sprachdaten, insbesondere bei Tandembetrieb bei Verbindungen zwischen mobilen Teilnehmernergibt. Durch die gleichzeitige Übertragung von Abtastwerten, z. B. PCM-Werten, und Signalparametern zur Sprachdatenrekonstruktion sind die Störungen bei einer Transcodiereinrichtung, die nicht für den tandemfreien Betrieb mit transparenter Durchschaltung von TRAU-Rahmen ausgestattet ist, geringer. Denn es werden auch bei der Übertragung von Kennungsinformationen immer noch Sprachdaten im ersten Datenstrom übertragen.

Auch bei Handover-Betrieb bietet die Erfindung Vorteile. Die Erfindung ist einfach in bestehende Systeme zu implementieren. Nur die Sprach-Transcoder eines Netzes sind betroffen. Beispielsweise werden von den 8 Bits pro Sprachabtastwert die beiden niedrigwertigsten Bits durch einen TRAU-Rahmen ersetzt (die Sprache wird dann auf 6 Bits reduziert), in welchem Kennungsinformation/Synchroninformation eingeblendet werden kann, um die Transcodiereinrichtungen aufeinander zu synchronisieren.

Durch Klemmung der niedrigwertigsten Bits auf Null bei der Übertragung von Sprachabtastwerten während eines Gesprächsaufbaus ist die Sprachqualität gegenüber bisher vorgeschlagenen Verfahren verbessert.

Bei einem Handover, d. h. bei einem Wechsel auf eine andere Transcodiereinrichtung, kann ein Rahmenverlust schnell festgestellt werden, bzw. vermieden werden, daß ungültige Rahmen als TRAU-Rahmen weiterverarbeitet werden. Eine nicht zum tandemfreien Betrieb ausgestattete Transcodiereinrichtung kann während eines Synchronisationsvorganges schon Sprachabtastwerte verarbeiten. Wenn nach abgeschlossener Synchronisation anstelle der Abtastwerte ein reduziertes Ruhemuster gesendet wird, kann der Sprachdecoder der Transcodiereinrichtung abgeschaltet werden oder für andere Zwecke, z. B. zur Codeumsetzung Full Rate/Half Rate im Downlink-Pfad verwendet werden.

### Zeichnungen

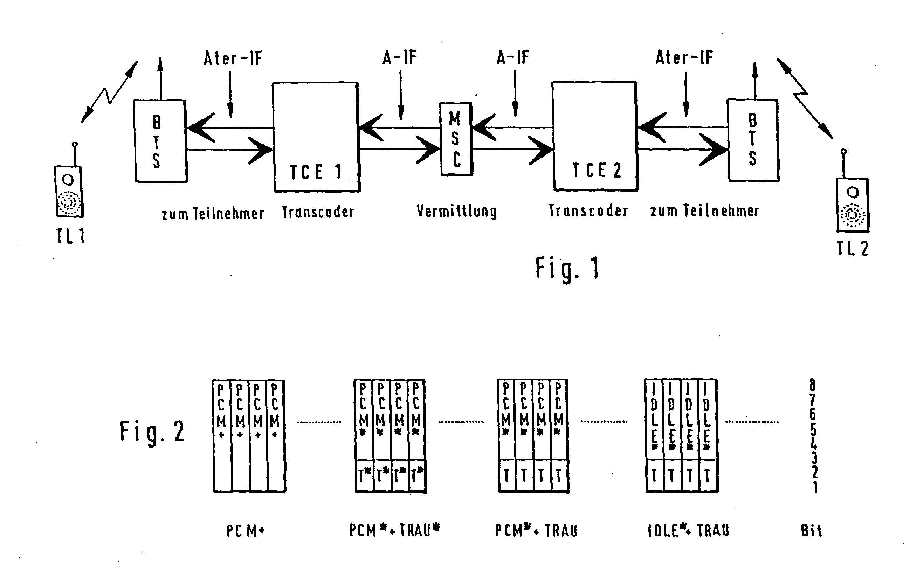

Figur 1 zeigt den Aufbau einer Verbindung zwischen zwei Teilnehmern,
Figur 2 die Daten einer Übertragungsschnittsstelle in zeitlicher Abfolge,
Figur 3 die in Figur 2 verwendeten Muster.
Figur 4 den Handover-Betrieb.

### Beschreibung der Ausführungsbeispiele

Im bestehenden GSM-Netz (Festnetzseite), beispielsweise dem DMCS 900 Netz, wird eine Transcodierung; d. h. eine Umcodierung der Sprachdaten vom vorgegebenen sogenannten TRAU (Transcode and Rate Adaption Unit) -Format nach der GSM-Recommendation 08.60 in das Übertragungsformat des Kommunikationsnetzes, z. B. dem öffentlichen Fernsprechnetz PSTN (PCM-Werte im 64 kbit/s Rahmenformat), stets vorgenommen.

Vom Teilnehmer Tl1 wird eine Verbindung zum Teilnehmer Tl2 geschaltet. Die Transcodiereinrichtung, nachfolgend stets Transcoder genannt, TCE1, die dem Teilnehmer Tl1 zugeordnet ist, sendet im Verkehrskanal des A-Interfaces A-IF eine Kennungsinformation, welche dem zugeschalteten Transcoder TCE2 (Tandem-) signalisiert, daß es sich um eine TFO(tandem free operation)-fähige Transcodiereinrichtung handelt. Die beiden Transcoder schalten, nachdem sie diese Signalisierung erkannt haben, in den TFO-Betrieb und tauschen die Sprachparameter aus. Trifft der Transcoder auf einen nicht TFO-fähigen Transcoder, so erhält dieser die Kennung der Gegenstelle innerhalb einer gewissen Zeit nicht und fällt daher wieder in den normalen Betrieb zurück, in welchem er die Sprache (Sprachabtastwerte) codiert bzw. decodiert.

Die Interfaces von den Transcodern TCE1, TCE2 zu den Teilnehmern Tl1, Tl2, die z. B. über Funkfeststationen BTS anschaltbar sind, sind mit ATER-IF bezeichnet. Die Vermittlung zwischen den Transcodiereinrichtungen ist mit MSC bezeichnet.

### Gesprächsaufbau

Beim Gesprächsaufbau stellt die Detektion des Übergangs am A-Interface (A-IF) in den unteren (niedrigwertigsten) beiden Bits der A-Abtastwerte von 00 auf ≠00 den Trigger dar. Der Trigger ist ggf. um T_{rigger} verzögert.

Diese Triggerbedingung ist dabei so gewählt, dass sie folgendem Verhalten der Vermittlungseinrichtung MSC genügt:
a) Die MSC sendet einem nichtbelegten Transcoder ein IDLE-Muster (Ruhemuster).
b) Die MSC schaltet beim Verbindungsaufbau zunächst eine Schleife zwischen Eingang und Ausgang der Leitung zum Transcoder bevor sie durchschaltet.
c) Die MSC schaltet die beiden Richtungen unterschiedlich schnell durch. Dies kann mit T_{trigger} ausgeglichen werden.

### Arbitrierungs-Vorgang

Der Transcoder TCE1 sendet am A-IF Interface anstelle der üblichen 8 Bit-PCM-Abtastwerte nun in den niedrigwertigsten 2 Bits dieser Abtastwerte einen TRAU-Rahmen (dieser wurde bisher zur Übertragung zwischen Funkstation und Transcoder verwendet und enthält Signalparameter zur Nutzdatenrekonstruktion). Der Datenstrom zwischen den Transcodern TCE1 und TCE2 ist demnach unterteilt in einen ersten Datenstrom mit Abtastwerten (PCM-Werten) und einen zweiten Datenstrom mit Signalparametern insbesondere TRAU-Rahmen. Beide Datenströme werden insbesondere während einer Verbindungsaufbauphase gleichzeitig übertragen. In einem solchen TRAU-Rahmen wird für eine vorgegebene Zeitdauer eine Kennungsinformation TRAU* gesendet. Sobald der TRAU* von der Gegenstelle erkannt wurde, wird in den TFO-Betrieb geschaltet. Der Vorgang wird von einem Timer T_{Sync} überwacht. Läuft dieser ab, wird in den normalen Betrieb übergegangen.

Alternativ können auch n, n<9 Bits für die Signalisierung verwendet werden mit beliebigen Rahmenstrukturen.

Alternativ kann auf die Kennungsinformation TRAU* verzichtet werden und lediglich die TRAU-Rahmen-Synchronisationsinformation herangezogen werden.

Solange die Synchronisation T_{sync} läuft, werden im Anschluss an die Kennungsinformation TRAU* die vom Aₜₑᵣ-IF ankommenden TRAU-Rahmen in den niedrigwertigen 2 Bits des A-IF gesendet. Dies ermöglicht bei der Gegenstelle einen sofortigen Übergang in den TFO-Betrieb nach dem Erhalt von der Kennungsinformation TRAU*. Die höherwertigen 6 Bits der Abtastwerte werden mit den prozessierten höherwertigen 6 Bits PCM* gefüllt. Dies reduziert den Qualitätsverlust, falls die Gegenstelle kein TFO-fähiger Transcoder ist.

Wird innerhalb einer Wiederholungszeit Tᵣₑₚₑₐₜ (Tᵣₑₚₑₐₜ < T_{sync}) kein TRAU* empfangen, wird nochmals ein TRAU* gesendet. Der Zweck dieses zweiten TRAU* ist im Handover-Fall beschrieben.

### TFO-Betrieb (tandemfreier Betrieb)

Nach dem Erkennen des TRAU* am A-IF werden im Anschluß daran die folgenden TRAU Rahmen(-Inhalte) zum Aₜₑᵣ-IF durchgereicht. Die Anpassung der ControlBits sowie das Timing des Aₜₑᵣ-TRAU-Rahmens wird den lokalen Gegebenheiten angepaßt. Unbrauchbare Rahmen von der Gegenstelle (BFI=1, TRAU*) werden durch den vorherigen Rahmen ersetzt und ggf. ein Muting eingeleitet. Ein evtl. Jitter in der TRAU-Rahmenlänge von +/-2Bits muß ebenfalls ausgeglichen werden. Codec-Umsetzungen, DTX und Muting-Funktionen werden ebenfalls in dieser Richtung durchgeführt. Vorteil ist, daß keine Signalisierung im Gespräch erforderlich ist, falls sich die lokalen Gegebenheiten ändern.

In die Gegenrichtung werden TRAU-Rahmen vom Aₜₑᵣ-IF zum A-IF transparent durchgereicht. Die oberen 6 Bits werden anstelle von PCM* nun durch IDLE* (010101) ersetzt. Dies ermöglicht die Abschaltung der Transcodier-Funktion, da diese Kapazität in einer FR/HR-Systemumgebung ggf. für die HRC <-> FRC Umsetzung benötigt wird. Es vermeidet ebenfalls eine zusätzliche Laufzeit. TRAU-Rahmen mit DatenInhalt können ebenfalls transparent durchgereicht werden.

Anstelle von IDLE* kann auch ein Modulo-n Zähler eingebaut werden, welcher eine noch sicherere Fehlerdetektion erlaubt.

### Handover

Der Handover-Fall ist in die drei nachfolgend beschriebenen Fälle zu untergliedern.

### a) Handover zu einem TFO-fähigen Transcoder

Zunächst wird der Abbruch der ankommenden TRAU-Rahmen registriert und ein Timer Tᵣₑₗₑₐₛₑ gestartet. Der Transcoder empfängt nach einer gewissen Zeit wieder einen TRAU* von dem neu zugeschalteten Transcoder TCE3, stoppt Tᵣₑₗₑₐₛₑ, sendet selbst einen TRAU* und bleibt im TFO-Betrieb. So kann der Transcoder ständig im TFO-Betrieb bleiben.

Kann der erste TRAU* nicht empfangen werden, da die Vermittlung MSC noch nicht durchgeschaltet hat, wird dessen zweiter TRAU* jedoch detektiert und führt zum TFO-Betrieb.

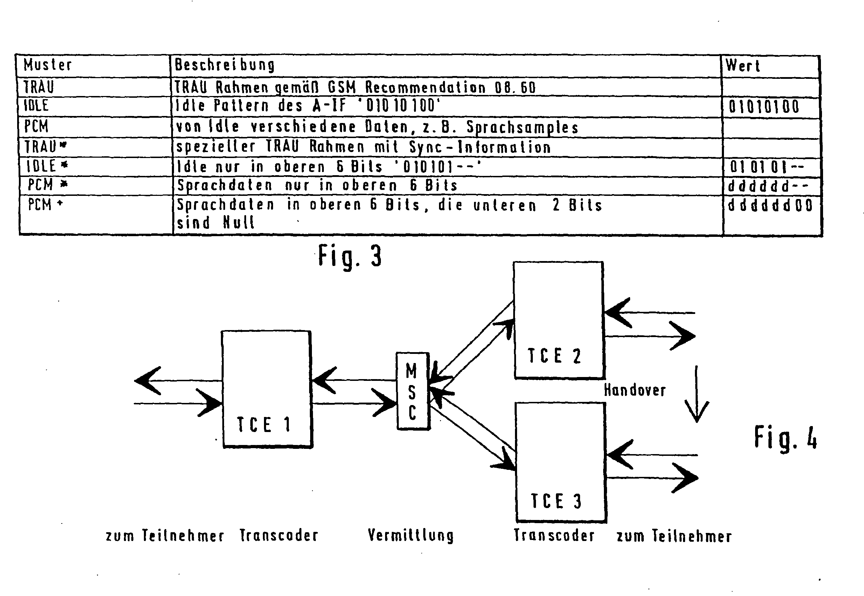

Um möglichst schnell den Handover vom Transcoder TCE2 zum Transcoder TCE3 zu detektieren und um ggf. auf eine Schleife am A-IF nicht zu triggern, wird der neu zugeschaltete Transcoder TCE3 (Fig. 4) beim Gesprächsaufbau "PCM+" senden. "PCM+" sind die PCM-Daten mit den unteren 2 Bits auf '00', um nicht TRAU-Sync-Bits vorzutäuschen. Dies ermöglicht, Störungen beim Teilnehmer zu unterdrücken.

### b) Handover zu einem nicht TFO-fähigen Transcoder

Zunächst wird der Abbruch der ankommenden TRAU-Rahmen registriert und ein Timer Tᵣₑₗₑₐₛₑ gestartet. Der Timer Tᵣₑₗₑₐₛₑ läuft ab und der Transcoder geht wieder in den Arbitrierungszustand, in welchem er die ankommenden Daten am A-IF encodiert. In den abgehenden Datenstrom am A-IF fügt er zu den TRAU-Rahmen nun decodierte PCM-Samples "PCM*" ein. Der zuerst gesendete TRAU ist ein TRAU*. Der Timer T_{sync} wird gestartet. Da vor Ablauf des Timers T_{sync} kein TRAU* empfangen wurde, wird in den normalen Betrieb zurückgefallen.

### c) Handover von einem nicht TFO-fähigen Transcoder

War die bisherige Gegenstelle nicht TFO-fähig, kann der Transcoder den Handover nicht erkennen. Fur die neue Gegenstelle ist es jedoch ein normaler Gesprächsaufbau, in welchem sie, falls sie TFO-fähig ist, zuerst einen TRAU* sendet. Diesen empfängt der Transcoder, sendet ebenfalls einen TRAU* und geht in den TFO-Betrieb. Erfolgt die Durchschaltung verzögert, geht der erste TRAU* verloren und der zweite TRAU* nach Tᵣₑₚₑₐₜ führt zum Erfolg.

### Gesprächsabbruch

Das Gesprächsende wird entweder durch den Abbruch der TRAU-Rahmen am Aₜₑᵣ-IF, oder durch detektierte Fehler am A-IF eingeleitet. Der Ablauf ist dann wie im Falle 'Handover zu einem nicht TFO-fähigen Transcoder'.

### Verhalten bei Fehlern im TFO-Betrieb

### a) Einzel-Fehler am A-IF

Einzel-Fehler konnen nicht in den Datenbits der TRAU-Rahmen erkannt werden. Einzel-Fehler konnen nur in den Synchronisationsbits der TRAU-Rahmen erkannt werden. Maßnahmen sind deshalb daraus keine abzuleiten, da keine Aussage über die Datenbits des TRAU-Rahmens gegeben ist.

### b) Burst-Fehler am A-IF

Stark gestörte TRAU-Rahmen ans Ater-IF weiterzuleiten bedeutet, daß evtl. starke Störgeräusche beim Teilnehmer auftreten können. Daher wird bei Detektion eines einzelnen Fehlers von einem Burst-Fehler ausgegangen, der restliche TRAU-Rahmen verworfen und durch den zuvor gesendeten TRAU-Rahmen ersetzt. Folgende Maßnahmen vermeiden diese Störungen weitestgehend:
1. Doppelte Fehlerüberwachung:
   1.1 durch die Kontrolle der (TRAU-)Rahmen Synchronisation
   1.2 durch die Kontrolle des IDLE*-Musters in den oberen 6 Bits
   zu 1.2 Alternativ: Kontrolle über ein periodisches Muster, beispielsweise eines Modulo-n Zählers, dessen Zählerzustände innerhalb des ersten Datenstromes übertragen werden.

### 2) Fehlerverschleierungs-Puffer

Ein Puffer mit ca. x ms(hier 5 ms) erlaubt die Daten bis zum letzten TRAU Sync-Bit zu speichern und im Fehlerfall durch die zuletzt gültigen Daten zu substituieren.

Ist der Burst sehr lang, wird wie im Fall 'Handover zu einem nicht TFO-fähigen Transcoder', in den normalen Betrieb übergegangen.

## Patentansprüche

1. Verfahren zum Übertragen von digitalisierten Daten zwischen einer rufenden und einer gerufenen Teilnehmereinheit (TL1, TL2) eines Mobilfunknetzes, wobei für das Übertragen ein vorgegebenes Rahmenformat verwendet wird, mit folgenden Maßnahmen:
- Schalten einer Verbindung zwischen den Teilnehmereinheiten (TL1, TL2);
- Signalisieren durch eine erste Transkodiereinrichtung (TCE1), die der rufenden Teilnehmereinheit (TL1) zugeordnet ist, einer zweiten Transkodiereinrichtung (TCE2), die der gerufenen Teilnehmereinheit (TL2) zugeordnet ist, dass es sich bei der ersten Transkodiereinrichtung (TCE1) um eine TFO, Tandemfrei-Betrieb,-fähige Transkodiereinrichtung handelt, wobei das Signalisieren für eine vorgegebene maximale Zeitdauer stattfindet;
- Schalten der der gerufenen Teilnehmereinheit (TL2) zugeordneten Transkodiereinrichtung (TCE2) in einen TFO-Betrieb, sobald die oben genannte Signalisierung von dieser erkannt wurde; und
- Austauschen von Sprachparametern zwischen den Transkodiereinrichtungen (TCE1, TCE2);
wobei ein Datenstrom zwischen den Transkodiereinrichtungen (TCE1, TCE2), die den Teilnehmereinheiten (TL1, TL2) zugeordnet sind, sowohl während der Zeitphase der Signalisierung, als auch während der Zeitphase des Austausches von Sprachparametern in einen ersten Datenstrom mit Sprachabtastwerten und in einen zweiten Datenstrom unterteilt wird; und
wobei der zweite Datenstrom während der Zeitphase der Signalisierung Kennungsinformationen und während der Zeitphase des Austausches Sprachparameter zur Sprachdatenrekonstruktion enthält.

2. Verfahren nach Anspruch 1, **dadurch gekennzeichnet, dass** für die Signalparameter des zweiten Datenstroms die für Mobilfunksysteme bekannten TRAU -Rahmen verwendet werden.

3. Verfahren nach Anspruch 1 oder 2, **dadurch gekennzeichnet, dass** der erste Datenstrom aus den höherwertigen Bits einer parallelen Bitsequenz und der zweite Datenstrom aus den entsprechenden niederwertigen Bits dieser Bitsequenz besteht.

4. Verfahren nach Anspruch 3, **dadurch gekennzeichnet, dass** der zweite Datenstrom durch Reduktion der Daten des ersten Datenstromes gebildet wird.

5. Verfahren nach Anspruch 3 oder 4, **dadurch gekennzeichnet, dass** die höherwertigen Bits als PCM-Abtastwerte übertragen werden.

6. Verfahren nach einem der Ansprüche 1 bis 5, **dadurch gekennzeichnet, dass** die zweite Transkodiereinrichtung (TCE2) der ersten Transkodiereinrichtung (TCE1) signalisiert, dass es sich bei der zweiten Transkodiereinrichtung (TCE2) um eine TFO-fähige Transkodiereinrichtung handelt, nachdem die zweite Transkodiereinrichtung (TCE2) von der ersten Transkodiereinrichtung (TCE1) die Kennungsinformationen empfangen hat.

7. Verfahren nach einem der Ansprüche 1 bis 6, **dadurch gekennzeichnet, dass** die Kennungsinformationen nach einem Übergang in den TFO-Betrieb eingebettet in TRAU-Rahmen zwischen den Transkodiereinrichtungen (TCE1, TCE2) übertragen werden.

8. Verfahren nach einem der Ansprüche 1 bis 7, **dadurch gekennzeichnet, dass** unmittelbar nach dem Aussenden der Kennungsinformationen die Signalparameter im TRAU-Rahmen gesendet werden.

9. Verfahren nach einem der Ansprüche 1 bis 8, **dadurch gekennzeichnet, dass** aus dem TFO-Betrieb zwischen den Transkodiereinrichtungen (TCE1, TCE2) ein Handover zu einer anderen TFO-fähigen oder zu einer nicht TFO-fähigen Transkodiereinrichtung ermöglicht wird.

## Claims

1. Method for transmitting digitized data between a calling and a called subscriber unit (TL1, TL2) in a mobile radio network, wherein a prescribed frame format is used for the transmission, having the following measures:
- a connection is made between the subscriber units (TL1, TL2);
- a first transcoding device (TCE1), which is associated with the calling subscriber unit (TL1), signals to a second transcoding device (TCE2), which is associated with the called subscriber unit (TL2), that the first transcoding device (TCE1) is a TFO, tandem-free operation, transcoding device, the signalling taking place for a prescribed maximum period of time;
- the transcoding device (TCE2) associated with the called subscriber unit (TL2) is switched to a TFO mode as soon as the aforementioned signalling has been recognized by said transcoding device; and
- voice parameters are exchanged between the transcoding devices (TCE1, TCE2);
wherein a data stream between the transcoding devices (TCE1, TCE2) that are associated with the subscriber units (TL1, TL2) is divided into a first data stream having voice samples and into a second data stream both during the time phase of signalling and during the time phase of exchange of voice parameters; and
wherein the second data stream contains identification information during the time phase of signalling and voice parameters for voice data reconstruction during the time phase of exchange.

2. Method according to Claim 1, **characterized in that** the TRAU frames that are known for mobile radio systems are used as the signal parameters of the second data stream.

3. Method according to Claim 1 or 2, **characterized in that** the first data stream consists of the more significant bits of a parallel bit sequence and the second data stream consists of the corresponding less significant bits of said bit sequence.

4. Method according to Claim 3, **characterized in that** the second data stream is formed by reducing the data of the first data stream.

5. Method according to Claim 3 or 4, **characterized in that** the more significant bits are transmitted as PCM samples.

6. Method according to one of Claims 1 to 5, **characterized in that** the second transcoding device (TCE2) signals to the first transcoding device (TCE1) that the second transcoding device (TCE2) is a TFO transcoding device after the second transcoding device (TCE2) has received the identification information from the first transcoding device (TCE1).

7. Method according to one of Claims 1 to 6, **characterized in that** after a change to the TFO mode the identification information is transmitted between the transcoding devices (TCE1, TCE2) embedded in TRAU frames.

8. Method according to one of Claims 1 to 7, **characterized in that** immediately after the sending of the identification information the signal parameters in the TRAU frame are sent.

9. Method according to one of Claims 1 to 8, **characterized in that** handover to another TFO transcoding device or to a non-TFO transcoding device is made possible between the transcoding devices (TCE1, TCE2) from the TFO mode.

## Revendications

1. Procédé de transmission de données numérisées entre une unité d'abonné appelante et une unité d'abonné appelée (TL1, TL2) d'un réseau de téléphonie mobile, dans lequel un format de trame prédéterminé est utilisé pour la transmission, comportant les étapes suivantes :
- établir une liaison entre les unités d'abonnés (TL1, TL2) ;
- envoyer une signalisation par l'intermédiaire d'un premier dispositif de transcodage (TCE1) qui est associé à l'unité d'abonné appelante (TL1), à un second dispositif de transcodage (TCE2) qui est associé à l'unité d'abonné appelée (TL2), indiquant que le premier dispositif de transcodage (TCE1) est un dispositif de transcodage apte à fonctionner en mode non tandem ou TFO, dans lequel la signalisation est effectuée pendant un intervalle de temps maximal prédéterminé ;
- faire passer le dispositif de transcodage (TCE2) associé à l'unité d'abonné appelée (TL2) dans un mode de fonctionnement TFO (Tandem Free Operation) dès que ladite signalisation a été détectée par ce dernier ; et
- échanger des paramètres vocaux entre les dispositifs de transcodage (TCE1, TCE2) ;
dans lequel un flux de données entre les dispositifs de transcodage (TCE1, TCE2) qui sont associés aux unités d'abonnés (TL1, TL2) est scindé pendant la phase temporelle de la signalisation ainsi que lors de la phase temporelle de l'échange de paramètres vocaux en un premier flux de données comportant des échantillons vocaux et en un second flux de données ; et
dans lequel le second flux de données contient des informations d'identification pendant la phase temporelle de signalisation et des paramètres vocaux pendant la phase temporelle d'échange à des fins de reconstruction de données vocales.

2. Procédé selon la revendication 1, **caractérisé en ce que**, pour les paramètres de signalisation du second flux de données, les trames TRAU connues des systèmes de téléphonie mobile sont utilisées.

3. Procédé selon la revendication 1 ou 2, **caractérisé en ce que** le premier flux de données est constitué de bits de poids fort d'une séquence binaire parallèle et **en ce que** le second flux de données est constitué des bits de poids faible correspondants de ladite séquence binaire.

4. Procédé selon la revendication 3, **caractérisé en ce que** le second flux de données est formé par réduction des données du premier flux de données.

5. Procédé selon la revendication 3 ou 4, **caractérisé en ce que** les bits de poids fort sont transmis sous la forme d'échantillons PCM.

6. Procédé selon l'une quelconque des revendications 1 à 5, **caractérisé en ce que** le second dispositif de transcodage (TCE2) envoie au premier dispositif de transcodage (TCE1) une signalisation indiquant que le second dispositif de transcodage (TCE2) est un dispositif de transcodage à fonctionnalité TFO, après que le second dispositif de transcodage (TCE2) a reçu du premier dispositif de transcodage (TCE1) les informations d'identification.

7. Procédé selon l'une quelconque des revendications 1 à 6, **caractérisé en ce que** les informations d'identification sont transmises en étant incorporées à des trames TRAU entre les dispositifs de transcodage (TCE1, TCE2) après un passage en mode de fonctionnement TFO.

8. Procédé selon l'une quelconque des revendications 1 à 7, **caractérisé en ce que** les paramètres de signalisation sont émis dans des trames TRAU immédiatement après l'émission des informations d'identification.

9. Procédé selon l'une quelconque des revendications 1 à 8, **caractérisé en ce qu'**un transfert est rendu possible à un autre dispositif de transcodage à fonctionnalité TFO ou à un autre dispositif de transcodage ne possédant pas de fonctionnalité TFO à partir du mode de fonctionnement TFO entre les dispositifs de transcodage (TCE1, TCE2).
